# EUROPÄISCHE PATENTSCHRIFT

(11) **EP 1 903 324 B1**
(45) Veröffentlichungstag und Bekanntmachung des Hinweises auf die Patenterteilung: **22.05.2013**
(21) Anmeldenummer: 07018687.9
(22) Anmeldetag: 24.09.2007
(51) Int. Cl.: G01M 17/02, G01M 17/007

(54) **Prüfstand für ein Kraftfahrzeug**
Test stand for a motor vehicle
Banc d'essai d'un véhicule automobile

(30) Priorität: 22.09.2006 DE 102006045480; 16.11.2006 DE 102006054439; 26.04.2007 DE 102007020072
(43) Veröffentlichungstag der Anmeldung: 26.03.2008
(73) Patentinhaber: Cartesy GmbH, 84524 Neuötting (DE)
(72) Erfinder: Femböck, Josef, 84524 Neuötting (DE)
(74) Vertreter: Ullrich & Naumann

(56) Entgegenhaltungen:
- EP-A1- 1 494 006
- WO-A1-00/71401
- DE-A1- 1 648 639
- DE-A1- 19 525 215
- US-A- 3 914 990
- US-A- 5 000 038
- US-A1- 2004 200 272

## Beschreibung

Die vorliegende Erfindung betrifft einen Prüfstand für ein Kraftfahrzeug, insbesondere für Krafträder, mit einer Laufrollen aufweisenden Abrolleinrichtung zum Abrollen eines Rads, mit einem Messrahmen und mit einem Gehäuse, wobei der Messrahmen in das Gehäuse und die Abrolleinrichtung in den Messrahmen einsetzbar sind. Derartige Prüfstande sind aus den Dokumenten US 5,000,038 A und 195 25 215 A1 bekannt.

Prüfstände für Kraftfahrzeuge sind aus der Praxis bekannt und existieren in den unterschiedlichsten Ausführungsformen. Sie finden Anwendung in Kraftfahrzeug-Reparaturwerkstätten und auch im Rahmen der bei Kraftfahrzeugen durchzuführenden Hauptuntersuchungen. Üblicherweise wird dort die Funktionsfähigkeit bzw. Wirksamkeit der Bremsen eines Kraftfahrzeugs überprüft.

Herkömmliche Laufrollen aufweisende Prüfstände - Rollenprüfstände - stellen aufgrund ihrer konstruktiven Ausgestaltung nichts anderes als eine unendlich lange Straße dar, die durch drehende Rollen simuliert wird. Die Funktionsweise eines solchen Prüfstands ergibt sich aus seiner konstruktiven Ausgestaltung. Das Kraftfahrzeug fährt zunächst langsam in den Rollensatz ein, bis es auf den Prüfrollen zum Stehen kommt. Dabei handelt es sich um ein statisches System, bei dem das Fahrzeug während der Prüfung steht. Die Rollen können über die Antriebsachse des Kraftfahrzeugs und damit über die Antriebsräder angetrieben werden.

Bei einem konventionellen Prüfstand ist jedoch häufig nachteilig, dass der Prüfstand für einen stationären Betrieb an einem einmalig festgelegten Ort ausgebildet ist. Insoweit ist die Ausgestaltung des Prüfstands auf eine hohe Dauerstabilität ausgerichtet. Die Bauteile des Prüfstands sind entsprechend voluminös, schwer und dadurch unhandlich ausgebildet. Ein Einsatz des Prüfstands an wechselnden Orten ist nur mit sehr großem Transport- und Installationsaufwand möglich.

Des Weiteren ist aus dem Dokument WO 00/71401 eine Vorrichtung zur Veranschaulichung der Wirkung eines Antiblockiersystems oder eines ähnlichen Systems bekannt. Dabei weist die Vorrichtung Abrolleinrichtungen mit Laufrollen zum Abrollen eines Rads auf. Die Abrolleinrichtungen sind in den Messrahmen einsetzbar. Aus dem Dokument US 2004/0200272 A1 ist ein Rollenprüfstand zur Leistungsmessung mit Laufrollen zum Abrollen von Rädern bekannt.

Ausgehend vom gattungsbildenden Stand der Technik liegt der Erfindung die Aufgabe zugrunde, einen Prüfstand anzugeben, der bei einfacher Handhabung und flexibler Einsetzbarkeit sichere und genaue Messvorgänge ermöglicht.

Erfindungsgemäß wird die voranstehende Aufgabe durch einen Prüfstand mit den Merkmalen des Patentanspruchs 1 gelöst.

In erfindungsgemäßer Weise ist erkannt worden, dass durch die Führungs- und/oder Festlegungsbereiche für den Messrahmen an dessen Längsseiten ein sicheres Einsetzen des Messrahmens in das Gehäuse ermöglicht ist. Weiter erfindungsgemäß ist erkannt worden, dass durch die zumindest geringfügig bewegliche horizontale Lagerung oder Verschiebbarkeit des Messrahmens senkrecht oder quer zur Fahrtrichtung des Kraftfahrzeugs Spurmessungen realisiert werden können. Außerdem ist erkannt worden, dass mit der geringfügig drehbaren Lagerung des Messrahmens um eine zu den Rollenachsen im Wesentlichen senkrecht verlaufende vertikale Drehachse eine sichere Anordnung eines zu prüfenden Kraftfahrzeugs und des zu prüfenden Rads auf der Abrolleinrichtung gewährleistet ist. Auch bei einem schrägen Auffahren eines Kraftfahrzeugs kann hierdurch eine selbstständige Richtungseinstellung der Abrolleinrichtung bzw. des Messrahmens relativ zum Rad erreicht werden. Auch wenn das Rad schräg aufgefahren wird, richtet sich bei dieser Ausgestaltung die Abrolleinrichtung bzw. der Messrahmen nach einem Beginn des Drehens des Rads quasi automatisch in die geeignete Prüfrichtung, in der die Laufrollen quer zur Fahrtrichtung des Kraftfahrzeugs stehen. Aufgrund dieser Selbstausrichtung ist ferner eine schmale Ausbildung der Laufrollen oder des Laufbandes und damit eine kompakte Ausgestaltung des Prüfstands ermöglicht.

Im Hinblick auf eine besonders einfache Handhabbarkeit des Prüfstands könnten die Abrolleinrichtung, der Messrahmen und das Gehäuse als modulare Einheiten ausgebildet sein. Dies gewährleistet eine individuelle Anpassbarkeit an unterschiedliche Mess- und Prüferfordernisse aufgrund der einfachen Austauschbarkeit der einzelnen Komponenten. Beispielsweise könnten je nach zu prüfendem Fahrzeugtyp unterschiedliche Messrahmen und/oder Abrolleinrichtungen zum Einsatz kommen.

Hinsichtlich einer besonders sicheren Anordnung der Abrolleinrichtung im Messrahmen könnte die Abrolleinrichtung auf vorgebbaren Auflageelementen des Messrahmens aufliegen. Hierdurch lässt sich eine exakte Positionierung der Abrolleinrichtung entsprechend den Messanforderungen realisieren.

Hinsichtlich einer besonders einfachen Ausgestaltung der Abrolleinrichtung könnte die Abrolleinrichtung zur Bildung eines Abrollrahmens zwei parallel zueinander angeordnete Seitenstreben aufweisen, an denen die Laufrollen gelagert sind. Die gebildete Anordnung von Laufrollen könnte hierdurch über die Seitenstreben besonders einfach transportiert und gehandhabt werden.

Zur Gewährleistung einer sicheren Anordnung der Abrolleinrichtung im Messrahmen könnten die Seitenstreben Ausnehmungen zur Aufnahme der Auflageelemente des Messrahmens aufweisen. Hierdurch ist eine sichere Vorgabe der Position der Abrolleinrichtung im Messrahmen gewährleistet.

Je nach Erfordernis könnten die Laufrollen auf unterschiedliche Weise in der Abrolleinrichtung positioniert sein. Bei einer besonders einfachen Ausgestaltung könnten die Laufrollen im Wesentlichen in einer Ebene angeordnet sein. Hierdurch könnte letztendlich eine ebene Fahrbahn simuliert werden.

Zur Gewährleistung einer besonders sicheren Anordnung eines Rads auf der Abrolleinrichtung könnten mindestens zwei Laufrollen in einer Ebene angeordnet sein und an beiden Enden dieser Anordnung von Laufrollen jeweils eine weitere Laufrollen gegenüber der Ebene versetzt oder erhöht angeordnet sein. Hierdurch ist quasi eine Aufnahme des Rads in der Abrolleinrichtung realisiert, wobei die jeweils eine weitere Laufrolle eine vordere und hintere Begrenzung und damit auch Führung für das Rad gewährleisten könnte. Bei einer bevorzugten Ausführungsform könnten drei Laufrollen von jeweils einer weiteren versetzt oder erhöht angeordneten Laufrolle begrenzt sein, so dass insgesamt fünf Laufrollen realisiert wären.

Bei einer alternativen Ausgestaltung könnte die Abrolleinrichtung zwei Paare von Laufrollen umfassen. In diesem Falle wären mindestens vier Laufrollen realisiert, die eine große Aufstandsfläche für ein Rad realisieren könnten. Ein punktuelles Eindrücken bzw. Walgen eines Rads, durch das Prüfergebnisse verfälscht werden, ist hierdurch weitgehend unterdrückt.

Im Konkreten könnten die Laufrollen im Wesentlichen parallel zueinander angeordnet sein. Hierdurch ist eine besonders homogene Abrollsituation für ein Rad realisiert, wobei eine Annäherung an eine Lauffläche bereitgestellt ist.

Im Hinblick auf eine sichere Anpassung der Laufrollen an ein zu prüfendes Rad könnte jeweils ein Paar von Laufrollen in jeweils einem Halter gelagert sein. In weiter vorteilhafter Weise könnte mindestens ein Halter um eine parallel zu den Rollenachsen angeordnete Schwenkachse verschwenkbar sein. Dabei sind vorzugsweise beide Halter um eine derartige Schwenkachse verschwenkbar, um eine Anpassung der Abrolleinrichtung an unterschiedliche Reifendurchmesser mit einer sicheren Anlage sämtlicher Laufrollen am Rad zu gewährleisten. Hierdurch ist quasi ein Doppelpendelsystem durch die beiden verschwenkbaren Halter realisiert. Sämtliche Laufrollen bilden quasi eine gemeinsame Lauffläche für das Rad.

Zur Bereitstellung eines besonders kompakten Prüfstands könnte die Schwenkachse oder könnten die Schwenkachsen in den Seitenstreben der Abrolleinrichtung gelagert sein. Hierdurch ist eine besonders Platz sparende Ausgestaltung des Prüfstands ermöglicht.

Bei einer konkreten Ausgestaltung könnten die Schwenkachsen jeweils zwischen den Laufrollen angeordnet sein. Bei einer besonders bevorzugten Ausgestaltung könnten die Schwenkachsen jeweils in der Mitte zwischen den Laufrollen und vorzugsweise zwischen den einzelnen Paaren der Laufrollen angeordnet sein. Hierdurch ist gewährleistet, dass eine in eine Drehrichtung erzeugte Bewegung einer Laufrolle zu einer entsprechenden Bewegung der anderen Laufrolle eines Paars von Laufrollen in die andere Drehrichtung führt. Hierdurch ist eine besonders sichere und quasi selbständige Anpassung und Anlage der Laufrollen an ein zu prüfendes Rad ermöglicht.

Je nach Anwendungsfall könnten die Schwenkachsen jeweils von der Mitte zwischen den Laufrollen weg und zu dem anderen Paar von Laufrollen hin verschoben angeordnet sein. Ist bei einer genau mittigen Anordnung der Schwenkachsen eine gleiche Gewichtsbelastung der Rollen durch ein zu prüfendes Rad erzeugt, so liegt bei der nach Innen verlagerten Anordnung der Schwenkachsen das Hauptgewicht des Rads auf den beiden inneren Rollen. Dabei könnten die beiden äußeren Laufrollen als quasi Stabilisierungsrollen dienen, auf denen deutlich weniger Gewicht als auf den Innenrollen liegt.

Bei einem anderen Anwendungsfall könnten die Schwenkachsen jeweils von der Mitte zwischen den Laufrollen weg und von dem anderen Paar von Laufrollen weg verschoben angeordnet sein. Bei dieser Ausgestaltung liegt das Hauptgewicht des Rads auf den Außenrollen.

Je nach Anordnung der Schwenkachsen können somit beliebige unterschiedliche Kraftverhältnisse auf den Rollen erzielt werden.

Bei einer weiter bevorzugten Ausgestaltung des Prüfstands könnte um sämtliche Laufrollen ein gemeinsames Laufband zur Bildung einer Lauffläche für das Rad geführt sein. Hierdurch wird in noch höherem Maße für das zu prüfende Rad eine Prüffläche und nicht eine Anordnung einzelner, durch Rollen gebildeter Prüfpunkte bzw. Prüflinien bereitgestellt.

Bei einer alternativen Ausgestaltung könnte jeweils um die Paare von Laufrollen jeweils ein Laufband zur Bildung zweier Laufflächen für das Rad geführt sein. Auch hierdurch ist eine Annäherung an eine Prüffläche für das Rad gewährleistet.

Bei einer weiteren alternativen Ausgestaltung könnte um die vorderen oder um die hinteren drei Laufrollen ein gemeinsames Laufband zur Bildung einer Lauffläche für das Rad geführt sein. Auch in diesem Fall ist eine gute Annäherung an eine flächige Abrollsituation für das Rad bereitgestellt.

Bei einer weiteren alternativen Ausgestaltung könnte um die mindestens zwei oder beiden mittleren Laufrollen ein gemeinsames Laufband zur Bildung einer Lauffläche für das Rad geführt sein. Bei einer außermittigen Anordnung der Schwenkachsen der Halter könnte dabei eine automatische Spannung des Laufbands durch die Gewichtsbelastung mittels des Rads erfolgen.

Zur sicheren Aufnahme der in den Messrahmen eingesetzten Abrolleinrichtung könnte der Messrahmen Auflageelemente für die Abrolleinrichtung aufweisen. Derartige Auflageelemente gewährleisten eine sichere vorgegebene Positionierung der Abrolleinrichtung im Messrahmen.

Zur Realisierung einer konstruktiv besonders einfachen Ausgestaltung könnten die Auflageelemente durch in den Messrahmen geschraubte Bolzen gebildet sein. Eine Auflage der Abrolleinrichtung könnte in diesem Fall im Konkreten auf den Köpfen der Bolzen erfolgen.

Hinsichtlich einer weiter besonders einfachen Ausgestaltung des Prüfstands könnte der Messrahmen zwei Seitenstreben und zwei die Seitenstreben miteinander verbindende Traversen aufweisen. Die Traversen könnten in einfacher Weise als Stangen ausgebildet sein.

Im Hinblick auf eine einfache Messung der gewünschten Messgrößen könnte der Messrahmen mindestens einen Sensor zur Messung des Gewichts, der Bremskraft, der Schubkraft, der Seitenkraft, des Seitenwinkels, der Wegstrecke, von Schwingungen und/oder der Drehzahl von Laufrollen aufweisen. Dabei handelt es sich lediglich um eine beispielhafte und nicht abschließende Aufzählung hinsichtlich der verwendbaren Sensoren.

Hinsichtlich einer einfachen Handhabbarkeit des Prüfstands könnten sämtliche Sensoren dem Messrahmen zugeordnet oder an dem Messrahmen angeordnet sein. Mit anderen Worten könnte der Messrahmen sämtliche Informationen aufnehmen, die vom Rad des Fahrzeugs übertragen werden. Beispielsweise könnte die Biegung der Traverse oder Traversen des Messrahmens zur Messung von Brems- und/oder Schubkräften genutzt werden.

Bei einer weiter konkreten Ausgestaltung könnte in oder an mindestens einer Laufrolle ein Magnet angeordnet sein. Ein derartiger Magnet könnte mit einem Hall-Effekt-Sensor zusammenwirken, der in oder an dem Messrahmen angeordnet sein könnte. Hiermit könnten Drehzahlen und damit die Geschwindigkeit gemessen werden.

Bei einer weiteren konstruktiven Ausgestaltung könnte der mindestens eine Sensor einen Dehnungsmessstreifen aufweisen. Hierdurch wäre eine preiswerte Messung des Gewichts des Kraftfahrzeugs aufgrund einer gemessenen Biegung eines Messrahmenbauteils realisierbar. Alternativ hierzu könnten auch Wägezellen zur Messung des Gewichts verwendet werden.

Bei einer weiter konstruktiven Ausgestaltung könnte mindestens ein Sensor ein Kraftsensor oder ein Winkelsensor sein. Mit einem Winkelsensor könnten Drehbewegungen des Messrahmens um eine im Wesentlichen vertikale Achse gemessen werden. Dabei wäre eine Spurmessung des Kraftfahrzeugs denkbar.

Im Hinblick auf eine besonders sichere Positionierung des Messrahmens könnten die Führungs- und/oder Festlegungsbereiche jeweils ein U-Profil aufweisen, in die der Messrahmen einsetzbar oder einschiebbar ist. Zur Realisierung eines besonders stabilen Gehäuses könnten die U-Profile durch eine Grundplatte miteinander verbunden sein. In diesem Fall wäre das Gehäuse im Wesentlichen durch die U-Profile und die Grundplatte gebildet.

Im Hinblick auf die Durchführung unterschiedlichster Messungen könnte der Messrahmen in den Führungs- und/oder Festlegungsbereichen zumindest geringfügig beweglich horizontal gelagert oder verschiebbar sein. Hierbei ist insbesondere an Brems- oder Beschleunigungsmessungen zu denken.

Ebenfalls im Hinblick auf beispielsweise Spurmessungen könnte der Messrahmen an den vorderen oder hinteren Enden der Führungs- und/oder Festlegungsbereiche festlegbar sein. Dabei könnte die Festlegbarkeit derart realisiert sein, dass eine zumindest geringfügige Auslenkung des Messrahmens am nicht festgelegten Ende des Messrahmens ermöglicht ist.

Im Hinblick auf die Anordnung von beispielsweise Antriebs- und/oder Bremseinrichtungen für die Laufrollen könnte das Gehäuse mindestens einen längsseitigen oder an einer Längsseite oder der Unterseite des Gehäuses ausgebildeten Durchgang aufweisen. Antriebs- und/oder Bremseinrichtungen könnten auf einfache Weise durch einen derartigen Durchgang hindurch gesteckt und mit einer oder mehreren Laufrollen gekoppelt werden.

Zur Realisierung eines besonders störungsunanfälligen Prüfstands könnte das Gehäuse zwei Abdeckelemente für die Traversen des in das Gehäuse eingesetzten Messrahmens aufweisen. Hierdurch wäre eine besonders geschützte Anordnung des Messrahmens im Gehäuse realisiert. Eine ungewollte Beschädigung des Messrahmens durch beispielsweise ein auf- oder abfahrendes Kraftfahrzeug könnte hierdurch vermieden werden.

Im Hinblick auf eine konstruktiv besonders einfache Ausgestaltung könnten die Abdeckelemente jeweils als U-Profil ausgebildet sein. Hierdurch wären gleichermaßen auch sehr stabile Abdeckelemente realisiert.

Hinsichtlich einer besonders einfachen Handhabbarkeit und Anordnung der Abdeckelemente könnten die Abdeckelemente an der Grundplatte festlegbar oder festschraubbar sein. Letztendlich wäre hierdurch ein sehr kompaktes Gehäuse und damit auch ein sehr kompakter Prüfstand realisiert.

Hinsichtlich eines einfachen und sicheren Anordnens des zu prüfenden Rads auf der Abrolleinrichtung könnte an dem Gehäuse eine Auffahr- und/oder Abfahrrampe vor und/oder hinter der Abrolleinrichtung anordenbar sein. Hierdurch ist ein sicheres Auffahren und/oder Abfahren des Rads bzw. Kraftfahrzeugs auf die Abrolleinrichtung und von der Abrolleinrichtung gewährleistet.

Zur Realisierung eines besonders sicheren und stabilen Prüfstands könnte die Auffahr- und/oder Abfahrrampe an einem der Abdeckelemente oder an den Abdeckelementen festlegbar oder festschraubbar sein. Insbesondere eine Festschraubbarkeit gewährleistet eine einfache Montage oder Demontage des gesamten Prüfstands.

Des Weiteren bieten derartige Auffahr- und/oder Abfahrrampen den weiteren Vorteil, dass während des Auffahrens auf den Prüfstand gleichzeitig eine Fixierung des Gehäuses auf dem Untergrund gewährleistet ist. Mit anderen Worten wird durch das Gewicht des auffahrenden Kraftfahrzeugs zunächst die Auffahr- und/oder Abfahrrampe auf den einen Untergrund gedrückt, wodurch aufgrund der Ankopplung der Auffahr- und/oder Abfahrrampe an das Gehäuse gleichzeitig eine Fixierung des Gehäuses und damit des gesamten Prüfstands auf dem Untergrund erfolgt. Ohne eine Auffahr- und/oder Abfahrrampe könnte unter ungünstigen Betriebsbedingungen ein Wegrutschen des Prüfstands während des Auffahrens des Kraftfahrzeugs erfolgen.

Hinsichtlich der Ausbildung der im Wesentlichen senkrecht verlaufenden vertikalen Drehachse könnte der Messrahmen im Konkreten relativ zur Grundplatte um die Drehachse drehbar gelagert sein.

Während der Durchführung einer Messung könnte das Gehäuse oder die Grundplatte auf einem Untergrund oder einer Platte angeordnet sein. Hierdurch ist ein besonders sicherer Prüfbereich bereitgestellt.

In weiter vorteilhafter Weise könnte auf dem Untergrund oder auf der Platte oder unter dem Gehäuse oder unter der Grundplatte eine rutschhemmende Auflage angeordnet oder aufgeklebt sein. Eine derartige Auflage bietet den Vorteil, dass das Gehäuse auf diese Auflage aufgesetzt werden könnte und damit quasi rutschsicher positioniert wäre. Ein Wegrutschen des Gehäuses während eines Auffahrens eines Kraftfahrzeugs könnte dadurch vermieden werden. Ein Kraftfahrzeug oder ein Motorrad könnte dabei zunächst auf die auf dem Untergrund oder auf der Platte angeordnete Auflage und erst anschließend auf die Abrolleinrichtung auffahren. Die Abrolleinrichtung bzw. das Gehäuse wird dabei auf die rutschhemmende Auflage gedrückt, so dass ein Wegrutschen beim Befahren der Abrolleinrichtung verhindert wird.

Bei einer konkreten Ausgestaltung könnte die rutschhemmende Auflage aus Kunststoff oder Gummi, vorzugsweise in Form einer Kunststoff- oder Gummimatte, hergestellt sein.

Je nach Anwendungsfall könnten die Laufrollen einerseits durch den Antrieb des zu prüfenden Kraftfahrzeugs oder bei einer vorteilhaften Alternative durch einen anderen Antrieb in Rotation versetzt werden. Im Konkreten könnte in besonders einfacher Weise mindestens einer Laufrolle eine Antriebs- und/oder Bremseinrichtung zugeordnet sein. Hierdurch ist eine besonders flexible Verwendung des Prüfstands gewährleistet, der bei unterschiedlichen Prüfarten zum Einsatz kommen kann. Dabei bieten sich beispielsweise Brems- oder Geschwindigkeitsmessungen an.

Zur Bereitstellung eines besonders flexiblen und modularen Prüfstands könnte die Anriebs- und/oder Bremseinrichtung an die mindestens eine Laufrolle - bei Bedarf - ansteckbar sein. Somit könnte der Prüfstand je nach Anwendungsfall mit oder ohne separatem Antrieb für eine oder mehrere Laufrollen eingesetzt werden.

Bei einer weiter vorteilhaften Ausgestaltung könnte die Antriebs- und/oder Bremseinrichtung elektrisch betrieben sein. Bei einem Einsatz als Bremse könnte beispielsweise Gegenwind für ein zu prüfendes Kraftfahrzeug simuliert werden. Die durch den Antrieb des Kraftfahrzeugs in Rotation versetzte Laufrolle könnte hierdurch einen Widerstand bereitstellen, gegen den die Antreibseinrichtung des Kraftfahrzeugs arbeiten muss.

In besonders vorteilhafter Weise könnte die Antriebs- und/oder Bremseinrichtung ein mehrstufiges, vorzugsweise 3- bis 4-stufiges, Planetengetriebe aufweisen. Hierdurch lässt sich ein besonders stabiles und kompaktes Getriebe realisieren.

Zur Ermittlung der durch das Kraftfahrzeug bei Fahr- und/oder Bremsbewegungen des Kraftfahrzeugs erzeugten Kraft könnte die hierbei zwischen dem Messrahmen oder der Abrolleinrichtung und einem vorgebbaren Fixpunkt wirkende Kraft messbar sein. Alternativ oder zusätzlich hierzu könnte der bei Fahr- und/oder Bremsbewegungen des Kraftfahrzeugs auftretende Verschiebeweg und/oder Drehwinkel zwischen dem Messrahmen oder der Abrolleinrichtung und einem vorgebbarem Fixpunkt messbar sein.

Letztendlich ist es hierdurch möglich, durch das Fahrzeug erzeugte Kräfte zeitgleich oder zeitversetzt in einem gemeinsamen Profil zu erfassen, wobei dies bei Anordnung des Fahrzeugs auf einem einzigen Prüfstand erfolgen kann.

Hinsichtlich einer besonders einfachen Handhabbarkeit und hinsichtlich eines besonders einfachen Transports des Prüfstands könnte der Abrolleinrichtung, mindestens einem der Halter, dem Messrahmen, dem Gehäuse oder der Grundplatte ein Handgriff zugeordnet sein. Bei einer weiter vorteilhaften Ausgestaltung könnte der Prüfstand derart dimensioniert sein, dass er in einem Handkoffer unterbringbar und dadurch sehr einfach zu transportieren ist.

Hinsichtlich einer sicheren Positionierung des Kraftfahrzeugs bzw. des Rads des Kraftfahrzeugs auf der Abrolleinrichtung könnte in Fahrtrichtung hinter der Abrolleinrichtung oder der Grundplatte oder dem Gehäuse eine Führung für das Rad angeordnet sein. In konstruktiv besonders einfacher Weise könnte die Führung eine Schiene aufweisen. Alternativ oder zusätzlich hierzu könnte die Führung eine auf einen Untergrund oder eine Platte aufgebrachte oder aufgemalte Linie sein. Die Führung könnte auch aus einer Linie mit anschließender Schiene bestehen.

In der Praxis könnte bspw. ein Motorrad mit seinem Vorderrad über die Abrolleinrichtung hinweg und dann entlang der Linie fahren, bis es mit dem Vorderrad in der Schiene angekommen ist. Hierdurch kann eine exakte Positionierung oder Zentrierung des Hinterrads erfolgen, das sich in dieser Position exakt auf der Abrolleinrichtung bzw. in der Mitte der Abrolleinrichtung befindet. Diese einfache Art der Positionierung bringt eine enorme Zeiteinsparung beim Ausrichten des Fahrzeugs relativ zur Abrolleinrichtung.

Der erfindungsgemäße Prüfstand bildet ein modulares Testsystem für beliebige Kraftfahrzeuge und insbesondere für Krafträder. Dabei kann der Prüfstand mit einem sehr einfachen Aufbau oder auch mit vielseitigen Erweiterungen realisiert werden. Eine komplette Testlinie mit Bremsentest, Tachometertest, Windsimulator, Fahrtenschreibertest, Vibrationstest und Geräuschtest ist denkbar. Zur Realisierung unterschiedlicher Messungen könnten mehrere Prüfstände hintereinander anordenbar sein. Dabei könnten entsprechende Kopplungsmittel an dem Gehäuse der einzelnen Prüfstände vorgesehen sein.

Der erfindungsgemäße Prüfstand bietet die Möglichkeit, quasi reale Straßenbedingungen zu simulieren. Daher ist es möglich, unterschiedlichste Typen von Motorrädern mit einer großen Bandbreite an Raddurchmessern und alle Typen von Reifen zu testen. Selbst Reifen mit grobem Profil können problemlos getestet werden.

Der neu entwickelte Prüfstand kombiniert alle Vorteile von verschiedenen Testmaschinen und bringt diese in einem System zusammen. Trotzdem bleibt der Prüfstand sehr klein und leicht und kann in einfacher Weise als mobiler Teststand verwendet werden.

Insbesondere bei der Verwendung eines Laufbands werden nahezu Straßenbedingungen hinsichtlich des Kontakts zwischen Reifen und Abrolleinrichtung realisiert. Eine extrem flache und kleine Ausgestaltung des Prüfstands ist möglich. Eine einfache Ausgestaltung des Prüfstands kann weniger als 10 kg wiegen.

Darüber hinaus könnte der erfindungsgemäße Prüfstand in vorhandene Prüfstände integriert werden.

Insbesondere bei einer Ausgestaltung des Prüfstands mit einem zwischen den mittleren Laufrollen geführten Laufband könnte ein horizontales Stabilisierungssystem realisiert werden. Bei einem derartigen System befinden sich die beiden mittleren Laufrollen vor dem Auffahren des Kraftfahrzeugs in einer erhöhten Bereitschaftsposition. Nach dem Fahren auf die Abrolleinrichtung bewegen sich die beiden mittleren Rollen nach unten und bilden die beiden äußeren Rollen Stabilisierungsrollen für das Rad. Dabei könnte der Rollwiderstand einschließlich eines eventuellen Laufbands und der Lager auf Null gehalten werden.

Der erfindungsgemäße Prüfstand zeichnet sich durch eine sehr hohe Messgenauigkeit aus.

Bei dem erfindungsgemäßen Prüfstand ist weiter vorteilhaft, dass aufgrund des einfachen Aufbaus der Abrolleinrichtung und aufgrund deren einfacher Entnehmbarkeit aus dem Messrahmen ein Austausch und eine Montage der Laufrollen sehr einfach und schnell realisierbar ist. Dies bringt Zeitvorteile beim Austausch verschlissener Laufrollen oder beim Wechsel verschiedener Laufrollen-Anordnungen.

Die Laufrollen sind in der Abrolleinrichtung im Wesentlichen fest gelagert, können jedoch in der Abrolleinrichtung feinjustiert werden. Hierzu könnten einfache Madenschrauben zur Verkippung der Laufrollen verwendet werden. Die Abrolleinrichtung oder die Anordnung aus Laufrollen und Seitenstreben ist nicht verwindungssteif ausgebildet, um eine sichere Übertragung von Kräften vom Rad zum Messrahmen zu ermöglichen.

Letztendlich könnte mit dem Prüfstand eine elektronische Fahrgasse mit mehreren Messpunkten durch kaskadierte Anordnung mehrerer Prüfstände erreicht werden.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung eines Ausführungsbeispiels der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: in einer perspektivischen Ansicht, schematisch, ein Ausführungsbeispiel eines erfindungsgemäßen Prüfstands für ein Kraftfahrzeug,
- Fig. 2: in einer Explosionsdarstellung, schematisch und von der Seite, das Ausführungsbeispiel aus Fig. 1,
- Fig. 3: in mehreren perspektivischen Explosionsdarstellungen, schematisch, das Ausführungsbeispiel aus Fig. 1,
- Fig. 4: in mehreren Ansichten, schematisch, die Abrolleinrichtung des Ausführungsbeispiels aus Fig. 1,
- Fig.5: in mehreren Ansichten, schematisch, den Messrahmen des Ausführungsbeispiels aus Fig. 1,
- Fig. 6: in mehreren Ansichten, schematisch, das Gehäuse des Ausführungsbeispiels aus Fig. 1 und
- Fig. 7: in mehreren Ansichten, schematisch, das Gehäuse mit eingesetztem Messrahmen des Ausführungsbeispiels aus Fig. 1.

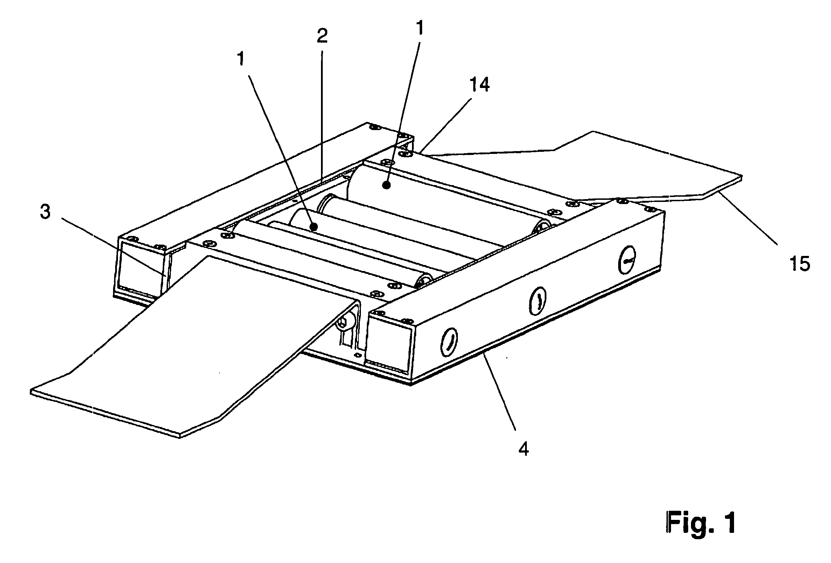

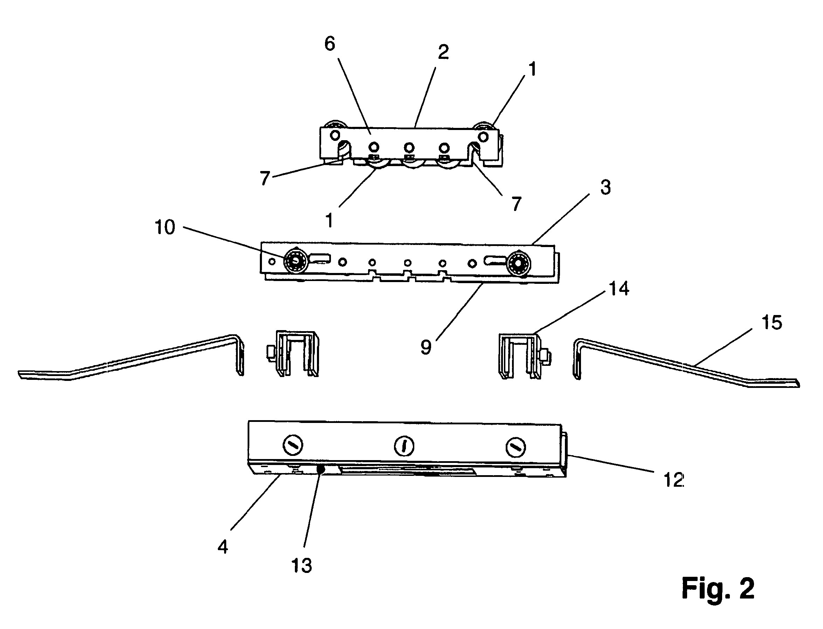

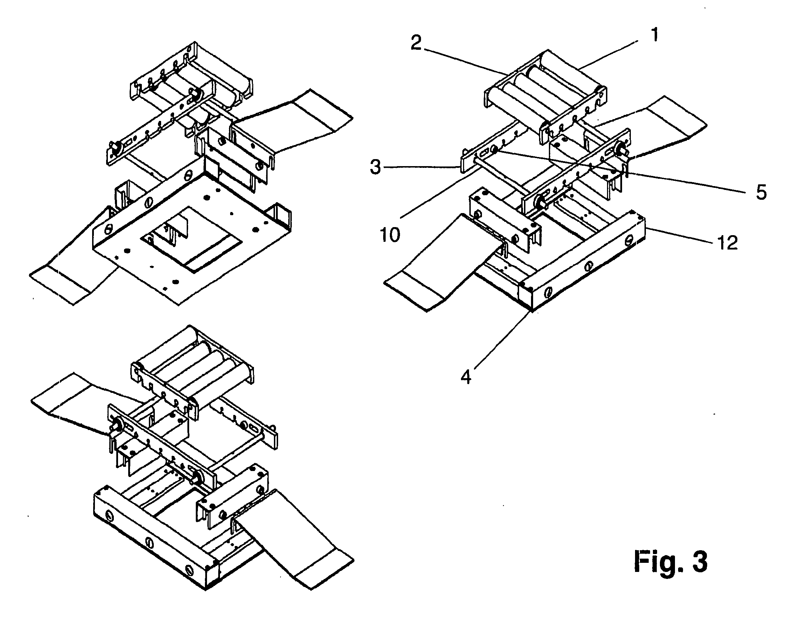

Die Figuren 1 bis 3 zeigen in mehreren schematischen Ansichten und Explosionsdarstellungen ein Ausführungsbeispiel eines Prüfstands für ein Kraftfahrzeug. Der Prüfstand weist eine Laufrollen 1 aufweisende Abrolleinrichtung 2 zum Abrollen eines Rads auf. Des Weiteren weist der Prüfstand einen Messrahmen 3 und ein Gehäuse 4 auf, wobei der Messrahmen 3 in das Gehäuse 4 und die Abrolleinrichtung 2 in den Messrahmen 3 einsetzbar sind. Bei dem erfindungsgemäßen Prüfstand ist eine besonders einfache und flexible Handhabung aufgrund der Einsetzbarkeit der Komponenten realisiert.

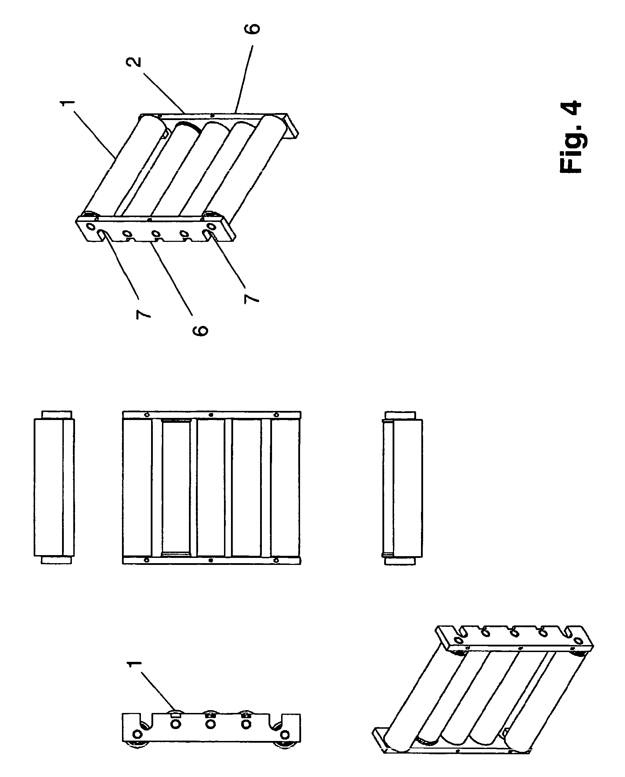

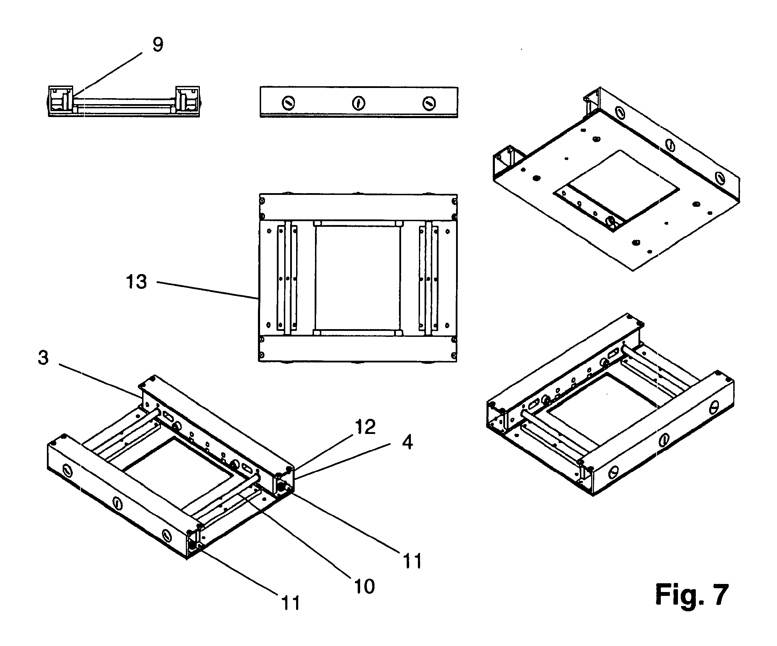

Die Figuren 4 bis 6 zeigen jeweils in separaten Ansichten die Abrolleinrichtung 2, den Messrahmen 3 und das Gehäuse 4. Die Figur 7 zeigt den in das Gehäuse 4 eingesetzten Messrahmen 3, wobei der Übersichtlichkeit halber die Abrolleinrichtung 2 nicht gezeigt bzw. entnommen ist.

Die Abrolleinrichtung 2, der Messrahmen 3 und das Gehäuse 4 sind als modulare Einheiten ausgebildet. Die Abrolleinrichtung 2 liegt auf vorgebbaren Auflageelementen 5 des Messrahmens 3 auf. Dabei weist die Abrolleinrichtung 2 zur Bildung eines Abrollrahmens 2 parallel zueinander angeordnete Seitenstreben 6 auf, an denen die Laufrollen 1 gelagert sind. Die Seitenstreben 6 weisen Ausnehmungen 7 zur Aufnahme der Auflageelemente 5 des Messrahmens 3 auf.

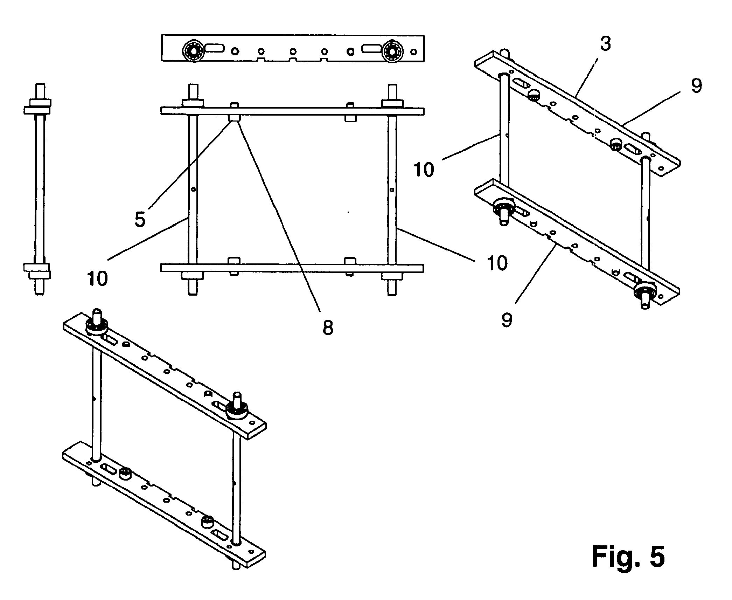

Wie in Figur 5 gezeigt, sind die Auflageelemente 5 als Bolzen 8 ausgebildet, wobei die Abrolleinrichtung 2 im eingesetzten Zustand auf den Köpfen der Bolzen 8 aufliegt.

Die Abrolleinrichtung 2 weist drei mittlere Laufrollen 1 auf, die im Wesentlichen in einer Ebene angeordnet sind. An beiden Enden dieser Anordnung von mittleren Laufrollen 1 ist jeweils eine weitere Laufrolle 1 angeordnet, die jeweils außerhalb der durch die mittleren drei Laufrollen 1 gebildeten Ebene angeordnet sind. Sämtliche Laufrollen 1 bzw. die Drehachsen der Laufrollen 1 sind im Wesentlichen parallel zueinander angeordnet.

Insbesondere um die mittleren drei Laufrollen 1 kann ein Laufband zur Bildung einer ebenen Lauffläche angeordnet sein.

Der Messrahmen 3 weist - wie insbesondere in Figur 5 gezeigt - zwei Seitenstreben 9 und zwei die Seitenstreben 9 miteinander verbindende Traversen 10 auf. Beim Betrieb des Prüfstands kann die durch Bewegungen des Kraftfahrzeugs verursachte Verbiegung der Traversen 10 gemessen werden, wobei hierbei insbesondere Brems- und/oder Beschleunigungskräfte gemessen werden können.

In mindestens einer Laufrolle 1 kann ein Magnet angeordnet sein, der mit einem in oder an dem Messrahmen 3 angeordneten Hall-Effekt-Sensor wechselwirken kann. Hierdurch können Drehzahlen bzw. Geschwindigkeiten gemessen werden.

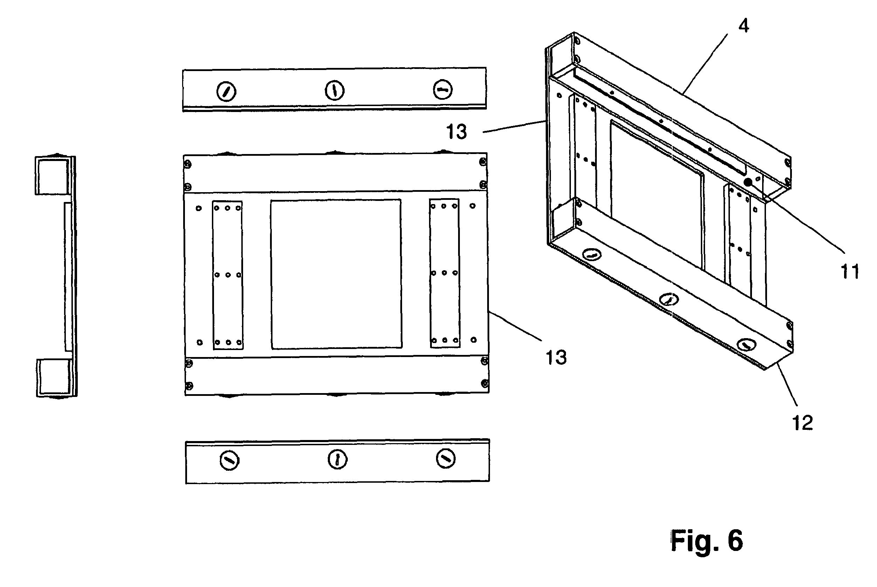

Wie insbesondere in Figur 6 gezeigt, weist das Gehäuse 4 an seinen Längsseiten jeweils einen Führungs- und/oder Festlegungsbereich 11 für den Messrahmen 3 auf. Beim Einsetzen des Messrahmens 3 in das Gehäuse 4 wird der Messrahmen 3 in diesem Führungs- und/oder Festlegungsbereich 11 angeordnet. Der Führungs- und/oder Festlegungsbereich 11 wird jeweils durch ein U-Profil 12 gebildet, in den oder die der Messrahmen 3 einsetzbar oder einschiebbar ist.

Die U-Profile 12 sind durch eine Grundplatte 13 miteinander verbunden. Das Gehäuse 4 wird im Wesentlichen durch die U-Profile 12 und die Grundplatte 13 gebildet.

Das Gehäuse 4 weist des Weiteren zwei Abdeckelemente 14 für die Traversen 10 des in das Gehäuse 4 eingesetzten Messrahmens 3 auf. Die Abdeckelemente 14 sind im Wesentlichen als U-Profil ausgebildet, das an der Grundplatte 13 festschraubbar ist.

Vor und hinter der Abrolleinrichtung 2 ist an dem Gehäuse 4 eine Auffahr- und/oder Abfahrrampe 15 angeordnet. Dabei ist die Auffahr- und/oder Abfahrrampe 15 jeweils an den Abdeckelementen 14 festgeschraubt. Auch hierdurch ist ein sehr einfach handhabbarer modularer Aufbau des Prüfstands realisiert.

Hinsichtlich weiterer vorteilhafter Ausgestaltungen des erfindungsgemäßen Prüfstands wird zur Vermeidung von Wiederholungen auf den allgemeinen Teil der Beschreibung sowie auf die beigefügten Patentansprüche verwiesen.

Schließlich sei ausdrücklich darauf hingewiesen, dass das voranstehend beschriebene Ausführungsbeispiel lediglich zur Erörterung der beanspruchten Lehre dient, diese jedoch nicht auf das Ausführungsbeispiel einschränkt.

## Patentansprüche

1. Prüfstand für ein Kraftfahrzeug, insbesondere für Krafträder, mit einer Laufrollen (1) aufweisenden Abrolleinrichtung (2) zum Abrollen eines Rads, mit einem Messrahmen (3) und mit einem Gehäuse (4), wobei der Messrahmen (3) in das Gehäuse (4) und die Abrolleinrichtung (2) in den Messrahmen (3) einsetzbar sind,
**dadurch gekennzeichnet, dass** das Gehäuse (4) an seinen Längsseiten jeweils einen Führungs- und/oder Festlegungsberelch (11) für den Messrahmen (3) aufweist und der Messrahmen (3) senkrecht oder quer zur Fahrtrichtung des Kraftfahrzeugs zumindest geringfügig beweglich horizontal gelagert oder verschiebbar ist und/oder
dass der Messrahmen um eine zu den Rollenachsen im Wesentlichen senkrecht verlaufende vertikale Drehachse - eine Z-Achse - zumindest geringfügig drehbar gelagert ist.

2. Prüfstand nach Anspruch 1, **dadurch gekennzeichnet, dass** die Abrolleinrichtung (2), der Messrahmen (3) und das Gehäuse (4) als modulare Einheiten ausgebildet sind und/oder
dass die Abrolleinrichtung (2) auf vorgebbaren Auflageelementen (5) des Messrahmens (3) aufliegt.

3. Prüfstand nach Anspruch 1 oder 2, **dadurch gekennzeichnet, dass** die Abrolleinrichtung (2) zur Bildung eines Abrollrahmens zwei parallel zueinander angeordnete Seitenstreben (6) aufweist, an denen die Laufrollen (1) gelagert sind,
wobei vorzugsweise die Seitenstreben (6) Ausnehmungen (7) zur Aufnahme der Auflageelemente (5) des Messrahmens (3) aufweisen.

4. Prüfstand nach einem der Ansprüche 1 bis 3, **dadurch gekennzeichnet, dass** die Laufrollen (1) im Wesentlichen in einer Ebene angeordnet sind oder
dass mindestens zwei Laufrollen (1) in einer Ebene angeordnet sind und an beiden Enden dieser Anordnung von Laufrollen (1) jeweils eine weitere Laufrolle (1) gegenüber der Ebene versetzt oder erhöht angeordnet ist oder
dass die Abrolleinrichtung (2) zwei Paare von Laufrollen (1) umfasst,
wobei vorzugsweise die Laufrollen (1) im Wesentlichen parallel zueinander angeordnet sind.

5. Prüfstand nach Anspruch 4, **dadurch gekennzeichnet, dass** jeweils ein Paar von Laufrollen (1) in jeweils einem Halter gelagert ist,
wobei mindestens ein Halter um eine parallel zu den Rollenachsen angeordnete Schwenkachse verschwenkbar ist und
wobei vorzugsweise die Schwenkachse oder die Schwenkachsen in den Seitenstreben gelagert ist oder sind.

6. Prüfstand nach Anspruch 5, **dadurch gekennzeichnet, dass** die Schwenkachsen jeweils zwischen den Laufrollen (1) angeordnet sind und/oder
dass die Schwenkachsen jeweils in der Mitte zwischen den Laufrollen (1) angeordnet sind oder
dass die Schwenkachsen jeweils von der Mitte zwischen den Laufrollen (1) weg und zu dem anderen Paar von Laufrollen (1) hin verschoben angeordnet sind oder
dass die Schwenkachsen jeweils von der Mitte zwischen den Laufrollen (1) weg und von dem anderen Paar von Laufrollen (1) weg verschoben angeordnet sind.

7. Prüfstand nach einem der Ansprüche 1 bis 6, **dadurch gekennzeichnet, dass** um sämtliche Laufrollen (1) ein gemeinsames Laufband zur Bildung einer Lauffläche für das Rad geführt ist oder
dass jeweils um die Paare von Laufrollen (1) jeweils ein Laufband zur Bildung zweier Laufflächen für das Rad geführt ist oder
dass um die vorderen oder um die hinteren drei Laufrollen (1) ein gemeinsames Laufband zur Bildung einer Lauffläche für das Rad geführt ist oder
dass um die mindestens zwei oder beiden mittleren Laufrollen (1) ein gemeinsames Laufband zur Bildung einer Lauffläche für das Rad geführt ist.

8. Prüfstand nach einem der Ansprüche 1 bis 7, **dadurch gekennzeichnet, dass** der Messrahmen (3) Auflageelemente (5) für die Abrolleinrichtung (2) aufweist,
wobei vorzugsweise die Auflageelemente (5) durch in den Messrahmen (3) geschraubte Bolzen (8) gebildet sind.

9. Prüfstand nach einem der Ansprüche 1 bis 8, **dadurch gekennzeichnet, dass** der Messrahmen (3) zwei Seitenstreben (9) und zwei die Seitenstreben (9) miteinander verbindende Traversen (10) aufweist und/oder
dass der Messrahmen (3) mindestens einen Sensor zur Messung des Gewichts, der Bremskraft, der Schubkraft, der Seitenkraft, des Seltenwinkels, der Wegstrecke, von Schwingungen und/oder der Dishzahl von Laufrollen (1) aufweist,
wobei vorzugsweise sämtliche Sensoren dem Messrahmen (3) zugeordnet oder an dem Messrahmen (3) angeordnet sind.

10. Prüfstand nach Anspruch 9, **dadurch gekennzeichnet, dass** in oder an mindestens einer Laufrolle (1) ein Magnet angeordnet ist und/oder
dass in oder an dem Messrahmen (3) ein Hall-Effekt-Sensor angeordnet ist und/oder dass der mindestens eine Sensor einen Dehnungsmessstreifen aufweist und/oder dass mindestens ein Sensor ein Kraftsensor oder ein Winkelsensor ist.

11. Prüfstand nach einem der Ansprüche 1 bis 10, **dadurch gekennzeichnet, dass** die Führungs- und/oder Festlegungsbereiche (11) jeweils ein U-Profil (12) aufweisen, in die der Messrahmen (3) einsetzbar oder einschiebbar ist, wobei die U-Profile (12) durch eine Grundplatte (13) miteinander verbunden sind.

12. Prüfstand nach einem der Ansprüche 1 bis 11, **dadurch gekennzeichnet, dass** der Messrahmen (3) in den Führungs- und/oder Festlegungsbereichen (11) zumindest geringfügig beweglich horizontal gelagert oder verschiebbar ist.

13. Prüfstand nach Anspruch 11 oder 12, **dadurch gekennzeichnet, dass** der Messrahmen (3) an den vorderen oder hinteren Enden der Führungs- und/oder Festlegungsbereiche (11) festlegbar ist,
wobei vorzugsweise die Festlegbarkeit derart realisiert ist, dass eine zumindest geringfügige Auslenkung des Messrahmens (3) am nicht festgelegten Ende des Messrahmens (3) ermöglicht ist.

14. Prüfstand nach einem der Ansprüche 1 bis 13, **dadurch gekennzeichnet, dass** das Gehäuse (4) mindestens einen längsseitigen Durchgang für Antriebs- und/oder Bremseinrichtungen für die Laufrollen (1) aufweist.

15. Prüfstand nach einem der Ansprüche 11 bis 14, **dadurch gekennzeichnet, dass** das Gehäuse (4) zwei Abdeckelemente (14) für die Traversen (10) des in das Gehäuse (4) eingesetzten Messrahmens (3) aufweist,
wobei vorzugsweise die Abdeckelemente (14) als U-Profil ausgebildet sind und/oder an der Grundplatte (13) festlegbar oder festschraubbar sind.

16. Prüfstand nach einem der Ansprüche 1 bis 15, **dadurch gekennzeichnet, dass** an dem Gehäuse (4) eine Auffahr- und/oder Abfahrrampe (15) vor und/oder hinter der Abrolleinrichtung (2) anordenbar sind oder ist,
wobei vorzugsweise die Auffahr- und/oder Abfahrrampe (15) an einem der Abdeckelemente (14) oder an den Abdeckelementen (14) festlegbar oder festschraubbar sind oder ist.

17. Prüfstand nach einem der Ansprüche 11 bis 16, **dadurch gekennzeichnet, dass**
der Messrahmen (3) relativ zur Grundplatte (13) um die Drehachse drehbar gelagert ist.

18. Prüfstand nach einem der Ansprüche 11 bis 17, **dadurch gekennzeichnet, dass** das Gehäuse (4) oder die Grundplatte (13) auf einem Untergrund oder einer Platte angeordnet ist und/oder
dass auf dem Untergrund oder auf der Platte oder unter dem Gehäuse (4) oder unter der Grundplatte (13) eine rutschhemmende Auflage angeordnet oder aufgeklebt ist,
wobei vorzugsweise die rutschhemmende Auflage aus Kunststoff oder Gummi, vorzugsweise in Form einer Kunststoff- oder Gummimatte, hergestellt ist.

19. Prüfstand nach einem der Ansprüche 1 bis 18, **dadurch gekennzeichnet, dass** mindestens einer Laufrolle (1) eine Antriebs- und/oder Bremseinrichtung zugeordnet ist,
wobei vorzugsweise die Antriebs- und/oder Bremseinrichtung an die mindestens eine Laufrolle (1) ansteckbar ist und/oder
elektrisch betrieben ist und/oder
ein mehrstufiges, vorzugsweise 3- bis 4-stufiges, Planetengetriebe aufweist.

20. Prüfstand nach einem der Ansprüche 1 bis 19, **dadurch gekennzeichnet, dass** zur Ermittlung der durch das Kraftfahrzeug bei Fahr- und/oder Bremsbewegungen des Kraftfahrzeugs erzeugten Kraft die hierbei zwischen dem Messrahmen (3) oder dei Abrolleinrichtung (2) und einem vorgebbaren Fixpunkt wirkende Kraft und/oder der bei Fahr- und/oder Bremsbewegungen des Kraftfahrzeugs auftretende Verschiebeweg und/oder Drehwinkel zwischen dem Messrahmen (3) oder der Abrolleinrichtung (2) und einem vorgebbaren Fixpunkt messbar ist.

21. Prüfstand nach einem der Ansprüche 1 bis 20, **dadurch gekennzeichnet, dass** der Abrolleinrichtung (2), mindestens einem der Halter, dem Messrahmen, dem Gehäuse oder der Grundplatte ein Handgriff zugeordnet ist und/oder dass in Fahrtrichtung hinter der Abrolleinrichtung (2) oder der Grundplatte (13) oder dem Gehäuse (4) eine Führung für das Rad angeordnet ist,
wobei vorzugsweise die Führung eine Schiene aufweist und/oder eine auf einen Untergrund oder eine Platte aufgebrachte Linie ist.

22. Prüfstand nach einem der Ansprüche 1 bis 21, **dadurch gekennzeichnet, dass** an dem Gehäuse (4) Kopplungsmittel vorgesehen sind, so dass mehrere Prüfstände hintereinander anordenbar sind.

## Claims

1. Test stand for a motor vehicle, in particular for motorcycles, having a rolling device (2) with rollers (1) for rolling a wheel, having a measuring frame (3) and having a housing (4), wherein the measuring frame (3) can be inserted into the housing (4) and
the rolling device (2) can be inserted into the measuring frame (3), **characterised in that** the housing (4) has on each of its long sides a guide and/or fixing region (11) for the measuring frame (3), and the measuring frame (3) is mounted or displaceable horizontally with at least slight movement perpendicularly or transversely to the direction of travel of the motor vehicle, and/or
**in that** the measuring frame is mounted to be at least slightly rotatable about a vertical axis of rotation running substantially perpendicularly to the roller axes - a Z-axis.

2. Test stand according to claim 1, **characterised in that** the rolling device (2), the measuring frame (3) and the housing (4) are in the form of modular units, and/or in that the rolling device (2) rests on predeterminable supporting elements (5) of the measuring frame (3).

3. Test stand according to claim 1 or 2, **characterised in that** the rolling device (2) has two lateral struts (6) arranged parallel to one another to form a rolling frame, on which lateral struts (6) the rollers (1) are mounted,
wherein the lateral struts (6) preferably have recesses (7) for receiving the supporting elements (5) of the measuring frame (3).

4. Test stand according to any one of claims 1 to 3, **characterised in that** the rollers (1) are arranged substantially in a plane, or
**in that** at least two rollers (1) are arranged in a plane and at each end of that arrangement of rollers (1) a further roller (1) is arranged offset or elevated relative to the plane, or
**in that** the roller device (2) comprises two pairs of rollers (1),
wherein the rollers (1) are preferably arranged substantially parallel to one another.

5. Test stand according to claim 4, **characterised in that** each pair of rollers (1) is mounted in a holder,
wherein at least one holder is pivotable about a pivot axis arranged parallel to the roller axes,and
wherein the pivot axis or pivot axes is or are preferably mounted in the lateral struts.

6. Test stand according to claim 5, **characterised in that** the pivot axes are each arranged between the rollers (1), and/or
**in that** the pivot axes are each arranged in the middle between the rollers (1), or
**in that** the pivot axes are arranged away from the middle between the rollers (1) and displaced towards the other pair of rollers (1), or
**in that** the pivot axes are each arranged away from the middle between the rollers (1) and displaced away from the other pair of rollers (1).

7. Test stand according to any one of claims 1 to 6, **characterised in that** a common belt is guided around all the rollers (1) to form a running surface for the wheel, or
**in that** a belt is guided around each pair of rollers (1) to form two running surfaces for the wheel, or
**in that** a common belt is guided around the front three rollers (1) or around the rear three rollers (1) to form a running surface for the wheel, or
**in that** a common belt is guided around the at least two or both middle rollers (1) to form a running surface for the wheel.

8. Test stand according to any one of claims 1 to 7, **characterised in that** the measuring frame (3) has supporting elements (5) for the rolling device (2),
wherein the supporting elements (5) are preferably formed by bolts (8) screwed into the measuring frame (3).

9. Test stand according to any one of claims 1 to 8, **characterised in that** the measuring frame (3) has two lateral struts (9) and two cross-members (10) which connect the lateral struts (9) together, and/or
**in that** the measuring frame (3) has at least one sensor for measurement of the weight,
the braking force, the thrust, the lateral force, the side angle, the distance, of vibrations and/or the speed of rollers (1),
wherein all the sensors are preferably associated with the measuring frame (3) or arranged on the measuring frame (3).

10. Test frame according to claim 9, **characterised in that** a magnet is arranged in or on at least one roller (1), and/or
**in that** a Hall effect sensor is arranged in or on the measuring frame (3), and/or
**in that** the at least one sensor has a strain gauge, and/or
**in that** at least one sensor is a force sensor or an angle sensor.

11. Test stand according to any one of claims 1 to 10, **characterised in that** the guide and/or fixing regions (11) each have a U-shaped profile (12) into which the measuring frame (3) can be inserted or introduced, wherein the U-shaped profiles (12) are connected together by a base plate (13).

12. Test stand according to any one of claims 1 to 11, **characterised in that** the measuring frame (3) is mounted or displaceable horizontally in the guide and/or fixing regions (11) with at least slight movement.

13. Test stand according to claim 11 or 12, **characterised in that** the measuring frame (3) can be fixed to the front or rear ends of the guide and/or fixing regions (11), wherein fixing is preferably achieved in such a manner as to permit an at least slight deflection of the measuring frame (3) at the end of the measuring frame (3) that is not fixed.

14. Test stand according to any one of claims 1 to 13, **characterised in that** the housing (4) has at least one opening on a long side for driving and/or braking devices for the rollers (1).

15. Test stand according to any one of claims 11 to 14, **characterised in that** the housing (4) has two cover elements (14) for the cross-members (10) of the measuring frame (3) inserted into the housing (4),
wherein the cover elements (14) are preferably in the form of U-shaped profiles and/or can be fixed or screwed to the base plate (13).

16. Test stand according to any one of claims 1 to 15, **characterised in that** an on- and/or off-ramp (15) can be arranged on the housing (4) in front of and/or behind the rolling device (2),
wherein the on and/or off-ramp (15) can preferably be fixed or screwed to one of the cover elements (14) or to the cover elements (14).

17. Test stand according to any one of claims 11 to 16, **characterised in that** the measuring frame (3) is mounted to be rotatable about the pivot axis relative to the base plate (13).

18. Test stand according to any one of claims 11 to 17, **characterised in that** the housing (4) or the base plate (13) is arranged on a subsurface or a plate, and/or
**in that** a non-slip support is arranged or adhesively bonded on the subsurface or on the plate or beneath the housing (4) or beneath the base plate (13),
wherein the non-slip support is preferably produced from plastics material or rubber, preferably in the form of a plastics or rubber mat.

19. Test stand according to any one of claims 1 to 18, **characterised in that** a driving and/or braking device is associated with at least one roller (1),
wherein the driving and/or braking device can preferably be attached to the at least one roller (1), and/or
is electrically operated, and/or
has a multi-step, preferably 3- to 4-step, planetary gear.

20. Test stand according to any one of claims 1 to 19, **characterised in that**, for determining the force generated by the motor vehicle during driving and/or braking movements of the motor vehicle, the force thereby acting between the measuring frame (3) or the rolling device (2) and a predeterminable fixed point and/or the displacement path and/or angle of rotation that occurs during driving and/or braking movements of the motor vehicle between the measuring frame (3) or the rolling device (2) and a predeterminable fixed point can be measured.

21. Test stand according to any one of claims 1 to 20, **characterised in that** a handle is associated with the rolling device (2), at least one of the holders, the measuring frame, the housing or the base plate, and/or
**in that** a guide for the wheel is arranged in the direction of travel behind the rolling device (2) or the base plate (13) or the housing (4),
wherein the guide preferably has a rail, and/or
is a line applied to a subsurface or a plate.

22. Test stand according to any one of claims 1 to 21, **characterised in that** coupling means are provided on the housing (4) so that a plurality of test stands can be arranged one behind the other.

## Revendications

1. Banc d'essai pour un véhicule automobile, en particulier pour des motocycles, comprenant un dispositif de roulement (2) présentant des galets de roulement (1) destiné à faire rouler une roue, comprenant un cadre de mesure (3) et comprenant un logement (4), dans lequel le cadre de mesure (3) peut être inséré dans le logement (4) et le dispositif de roulement (2) dans le cadre de mesure (3),
**caractérisé en ce que** le logement (4) présente sur chacun de ses côtés longitudinaux une zone de guidage et/ou de fixation (11) pour le cadre de mesure (3) et le cadre de mesure (3) est monté ou peut être déplacé perpendiculairement ou transversalement par rapport à la direction de roulage du véhicule automobile de manière au moins légèrement mobile horizontalement, et/ou
**en ce que** le cadre de mesure est monté de manière au moins légèrement pivotante autour d'un axe de rotation vertical s'étendant sensiblement perpendiculairement par rapport aux essieux à rouleaux - un axe Z.

2. Banc d'essai selon la revendication 1, **caractérisé en ce que** le dispositif de roulement (2), le cadre de mesure (3) et le logement (4) sont réalisés en tant qu'unités modulaires, et/ou
**en ce que** le dispositif de roulement (2) repose sur des éléments de support pouvant être prédéfinis (5) du cadre de mesure (3).

3. Banc d'essai selon la revendication 1 ou 2, **caractérisé en ce que** le dispositif de roulement (2) présente, de façon à former un cadre de roulement, deux montants latéraux (6) agencés parallèlement l'un avec l'autre, sur lesquels les galets de roulement (1) sont montés,
étant entendu que les montants latéraux (6) présentent de préférence des évidements (7) destinés à recevoir les éléments de support (5) du cadre de mesure (3).

4. Banc d'essai selon l'une des revendications 1 à 3, **caractérisé en ce que** les galets de roulement (1) sont agencés sensiblement dans un plan, ou
**en ce qu'**au moins deux galets de roulement (1) sont agencés dans un plan, et à chacune des deux extrémités de cet agencement de galets de roulement (1), un galet de roulement supplémentaire (1) est agencé dans une position décalée ou surélevée par rapport au plan, ou
**en ce que** le dispositif de roulement (2) comprend deux paires de galets de roulement (1),
étant entendu que les galets de roulement (1) sont de préférence agencés sensiblement parallèlement l'un avec l'autre.

5. Banc d'essai selon la revendication 4, **caractérisé en ce qu'**une paire de galets de roulement (1) est à chaque fois montée dans un support,
étant entendu qu'au moins un support peut pivoter autour d'un axe de pivotement agencé parallèlement par rapport aux essieux à rouleaux, et étant entendu que de préférence, l'axe de pivotement ou les axes de pivotement est monté ou sont montés dans les montants latéraux.

6. Banc d'essai selon la revendication 5, **caractérisé en ce que** les axes de pivotement sont chacun agencés entre les galets de roulement (1), et/ou en ce que les axes de pivotement sont chacun agencés au centre entre les galets de roulement (1), ou
**en ce que** les axes de pivotement sont chacun agencés dans une position éloignée du centre entre les galets de roulement (1) et décalée en direction de l'autre paire de galets de roulement (1), ou
**en ce que** les axes de pivotement sont chacun agencés dans une position éloignée du centre entre les galets de roulement (1) et décalée à l'opposé de l'autre paire de galets de roulement (1).

7. Banc d'essai selon l'une des revendications 1 à 6, **caractérisé en ce qu'**une bande continue commune est entraînée autour de tous les galets de roulement (1) de façon à former une surface de roulement pour la roue, ou **en ce qu'**une bande continue est entraînée respectivement autour de chaque paire de galets de roulement (1) de façon à forme deux surfaces de roulement pour la roue, ou
**en ce qu'**une bande continue commune est entraînée autour des galets de roulement avant ou autour des trois galets de roulement arrière (1) de façon à former une surface de roulement pour la roue, ou
**en ce qu'**une bande continue commune est entraînée autour des deux ou des au moins deux galets de roulement centraux (1) de façon à former une surface de roulement pour la roue.

8. Banc d'essai selon l'une des revendications 1 à 7, **caractérisé en ce que** le cadre de mesure (3) présente des éléments de support (5) pour le dispositif de roulement (2),
étant entendu que les éléments de support (5) sont de préférence formés au moyen de boulons (8) vissés dans le cadre de mesure (3).

9. Banc d'essai selon l'une des revendications 1 à 8, **caractérisé en ce que** le cadre de mesure (3) présente deux montants latéraux (9) et deux traverses (10) reliant les montants latéraux (9) l'un avec l'autre, et/ou
**en ce que** le cadre de mesure (3) présente au moins un capteur destiné à mesurer le poids, la force de freinage, la poussée, la force latérale, l'angle latéral, la distance, les oscillations et/ou la vitesse de rotation des galets de roulement (1),
étant entendu que tous les capteurs sont de préférence affectés au cadre de mesure (3) ou agencés sur le cadre de mesure (3).

10. Banc d'essai selon la revendication 9, **caractérisé en ce qu'**un aimant est agencé dans ou sur au moins un galet de roulement (1), et/ou
**en ce qu'**un capteur à effet Hall est agencé dans ou sur le cadre de mesure (3), et/ou
**en ce que** l'au moins un capteur présente une jauge de contrainte, et/ou en ce qu'au moins un capteur est un capteur de force ou un capteur d'angle.

11. Banc d'essai selon l'une des revendications 1 à 10, **caractérisé en ce que** les zones de guidage et/ou de fixation (11) présentent chacune un profile en U (12) dans lequel le cadre de mesure (3) peut être inséré ou coulissé, étant entendu que les profilés en U (12) sont reliés l'un avec l'autre au moyen d'une plaque de base (13).

12. Banc d'essai selon l'une des revendications 1 à 11, **caractérisé en ce que** le cadre de mesure (3) est monté ou peut être déplacé de manière au moins légèrement mobile horizontalement dans les zones de guidage et/ou de fixation (11).

13. Banc d'essai selon la revendication 11 ou 12, **caractérisé en ce que** le cadre de mesure (3) peut être fixé sur les extrémités avant ou arrière des zones de guidage et/ou de fixation (11),
étant entendu que la possibilité de fixation est de préférence réalisée de telle sorte qu'une déviation au moins légère du cadre de mesure (3) au niveau de l'extrémité non fixée du cadre de mesure (3) est permise.

14. Banc d'essai selon l'une des revendications 1 à 13, **caractérisé en ce que** le logement (4) présente au moins un passage sur le côté longitudinal pour des dispositifs d'entraînement et/ou de freinage pour les galets de roulement (1).

15. Banc d'essai selon l'une des revendications 11 à 14, **caractérisé en ce que** le logement (4) présente deux éléments de recouvrement (14) pour les traverses (10) du cadre de mesure (3) inséré dans le logement (4),
étant entendu que de préférence, les éléments de recouvrement (14) sont réalisés sous la forme de profilés en U et/ou peuvent être fixés ou vissés sur la plaque de base (13).

16. Banc d'essai selon l'une des revendications 1 à 15, **caractérisé en ce qu'**une rampe d'accès et/ou de sortie (15) peut ou peuvent être agencée(s) sur le logement (4) avant et/ou après le dispositif de roulement (2),
étant entendu que la rampe d'accès et/ou de sortie (15) peut ou peuvent de préférence être fixée(s) ou vissée(s) sur l'un des éléments de recouvrement (14) ou sur les éléments de recouvrement (14).

17. Banc d'essai selon l'une des revendications 11 à 16, **caractérisé en ce que** le cadre de mesure (3) est monté de façon à pouvoir pivoter autour de l'axe de rotation par rapport à la plaque de base (13).

18. Banc d'essai selon l'une des revendications 11 à 17, **caractérisé en ce que** le logement (4) ou la plaque de base (13) est agencé(e) sur un fonds ou une plaque, et/ ou
**en ce qu'**un revêtement antidérapant est agencé ou collé sur le fond ou sur la plaque ou en dessous du logement (4) ou en dessous de la plaque de base (13),
étant entendu que le revêtement antidérapant est de préférence réalisé en plastique ou en caoutchouc, de préférence sous la forme d'un tapis en plastique ou en caoutchouc.

19. Banc d'essai selon l'une des revendications 1 à 18, **caractérisé en ce qu'**au moins un galet de roulement (1) est affecté à un dispositif d'entraînement et/ou de freinage,
étant entendu que le dispositif d'entraînement et/ou de freinage peut de préférence être attaché à l'au moins un galet de roulement (1), et/ou
il est opéré électriquement, et/ou
il présente un engrenage planétaire à niveaux multiples, de préférence à 3 ou 4 niveaux.

20. Banc d'essai selon l'une des revendications 1 à 19, **caractérisé en ce qu'**aux fins de la détermination de la force produite par le véhicule automobile lors de mouvements de roulage et/ou de freinage du véhicule automobile, la force s'exerçant ce faisant entre le cadre de mesure (3) ou le dispositif de roulement (2) et un point fixe pouvant être prédéfini et/ou la voie de déplacement survenant lors de mouvements de roulage et/ou de freinage du véhicule automobile et/ou l'angle de rotation entre le cadre de mesure (3) ou le dispositif de roulement (2) et un point fixe pouvant être prédéfini peut être mesuré(e).

21. Banc d'essai selon l'une des revendications 1 à 20, **caractérisé en ce qu'**une poignée est affectée au dispositif de roulement (2), au moins à l'un des éléments parmi le support, le cadre de mesure, le logement ou la plaque de base, et/ou
**en ce qu'**un guide pour la roue est agencé, dans le sens de roulage, après le dispositif de roulement (2) ou la plaque de base (13) ou le logement (4),
étant entendu que de préférence, le guide présente un rail et/ou est une ligne installée sur un fond ou une plaque.

22. Banc d'essai selon l'une des revendications 1 à 21, **caractérisé en ce que** des moyens de couplage sont prévus sur le logement (4), de telle sorte que plusieurs bancs d'essai peuvent être agencés l'un après l'autre.
